# EUROPEAN PATENT SPECIFICATION

(11) **EP 0 564 146 B1**
(45) Date of publication and mention of the grant of the patent: **05.03.1997**
(21) Application number: 93302200.6
(22) Date of filing: 23.03.1993
(51) Int. Cl.: C09D 11/00, C09B 69/04

(54) **Ink for inkjet printer**
Tinte für das Tintenstrahldruckverfahren
Encre pour impression par jet d'encre

(30) Priority: 30.03.1992 IT TO920283
(43) Date of publication of application: 06.10.1993
(73) Proprietor: Ing. C. Olivetti & C., S.p.A., 10015 Ivrea (IT)
(72) Inventor: Frera, Laura, I-10017 Montanaro (IT); Soudaz, Anna Maria, I-10015 Ivrea (IT)
(74) Representative: Marlow, Nicholas Simon

(56) References cited:
- EP-A- 0 408 195
- EP-A- 0 441 987
- EP-A- 0 494 523

## Description

### BACKGROUND OF THE INVENTION

The invention relates to inks which are suitable for ink jet printers, including those which make use of heat energy for the expulsion of drops of ink.

The ink jet printing system is well known.

In general terms, a fluid ink is forced under pressure through the nozzles of a writing head.

Just as well known is the distinction between the continuous ink jet type and the so-called "on demand ink jet" type.

An ink jet printing device of the first type is described in the USA Patent No. 3 596 275, while a device of the "on demand" type is described in the Italian Patent No. 1,182,478 in the name of the applicant.

A known variant of the "on demand" type is the so-called "bubble" or "thermal ink jet" type, which makes use of heat as a source of energy to generate a bubble of vapour which creates a brief high-pressure pulse for the expulsion of a drop of ink.

This last type of printing device is described in the USA Patent Nos. 3 179 042 and 4 723 129.

In the first USA Patent No. 3 179 042 the drops of ink are expelled by a nozzle through the effect of the vaporisation of the ink in a subjacent cell, caused by the Joule effect by a current pulse passing through the ink contained between two electrodes.

In the second USA Patent No. 4 723 129, the drops of ink are expelled on account of a strong pressure pulse created by the instantaneous formation of a bubble of vapour as a result of the heating of a resistor placed in the ink duct upstream of the nozzle.

The inks which are employed in these systems, and in particular in bubble or thermal ink jet printers, must comply with specific requirements, such as the following:
- the ink must produce images of high quality, in terms of definition and contrast, on plain paper;
- the ink must have good fixing characteristics on the paper, drying rapidly and proving itself to be difficult to remove by scrubbing;
- the ink must produce script with excellent storage characteristics, i.e. must give optimum performance in terms of "waterfastness" and of "lightfastness"; "waterfastness" is defined as the capacity of the script to resist the action of water, both in terms of removal and in terms of the running of characters, while "lightfastness" is defined as the capacity of the script not to lose its optical density, and not to change colour when it is exposed to the action of light;
- the ink must be entirely compatible with the materials of the writing head;
- the ink should not cause, even after prolonged periods of inactivity of the writing head, the nozzles to become clogged;
- the ink must be thermally stable; in particular, when it is used in a bubble or thermal head, it should not give rise to any insoluble combustion residues on the resistors;
- the ink must be stable over time, without exhibiting traces of sedimentation, nor of biological growth;
- the ink must be ecologically safe, nontoxic and nonflammable.

Among the above listed requirements, "waterfastness" and "lightfastness" of the script assume special importance where the indelibility of the document is required for legal use.

The USA Patent No. 4 685 968 discloses ink for thermal ink jet printers, which use one of the following compound as dye:
- Food Black 2, or:
   the direct dyes: Red C.I.9, Red C.I.227, Yellow C.I.86, Blue C.I.86;
   the acid dyes Yellow C.I.23, Blue C.I.9 and Blue C.I. 185.

Some sodium ions present in the molecule of such dyes are substituted by a bifunctional amine radical such as triethanolamine.

It has been desired to provide a formulation for an ink which is particularly suitable for ink jet printers, which combines good characteristics of "lightfastness" and "waterfastness" with high optical density, high definition and good characteristics of ejectability.

### SUMMARY OF THE INVENTION

The subject of the invention is an ink, characterised in that it comprises a mixture of two dyes, one of which is expediently modified, to obtain high characteristics of "waterfastness" and lightfastness", without adversely affecting the optical density and the resolution of the script and the characteristics of ejectability of the ink.

According to the invention there is provided ink for an ink jet printer comprising a dye component and a cosolvent vehicle for the dye component, the dye component comprising a mixture of dye C.I168 and dye C.I.51 the molecule of which comprises at least one sodium ion. Optionally, some or all of the sodium ions may be replaced by substituted amines.

The invention will be further described by way of example in the description, which follows, of some preferred embodiments.

### DESCRIPTION OF THE INVENTION

The dyes used in the ink according to the invention are the direct black Colour Index 168, in the commercial form of the sodium salt, represented by the formula: 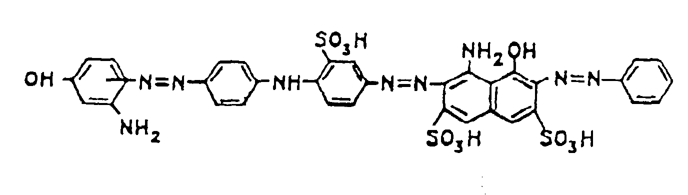 and the direct black Colour Index 51, represented by the formula

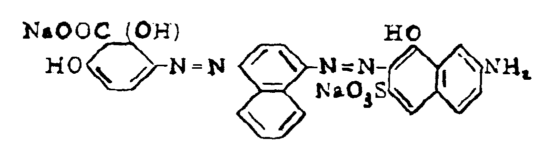

The latter dye, although having optimal characteristics of resistance to water and to light, exhibits two disadvantages in the commercial form: poor dyeing power and poor solubility in the vehicle employed in the inks of this invention. Such disadvantages are overcome according to the present invention with the mixing of the dye C.I.51 with the dye C.I.168, and with the total or partial substitution of the sodium ions of the dye C.I.51 by organic bases.

The sodium ions of the C.I.51 may be substituted totally or partially by organic bases included among the following substituted amines: 2-aminoethanol; 2,2'-iminodiethanol; 2,2',2''-triethanolnitrile; 1-amino-2-propanol; 1,1'-iminodi-2-propanol; 1,1',1''-nitrilotri-2-propanol; N-methylethanolamine; N-N-dimethylethanolamine; N-methyldiethanolamine; 4-(2-hydroxyethyl)morpholine; N-(2,3-dihydroxypropyl)morpholine.

The substitution is carried out in accordance with techniques, such as exchange on strong cationic resin, inverse osmosis and precipitation in an acid medium followed by resalification.

The dye substance, as a mixture of the two above cited dyes, is preferably contained in the ink in quantities of between 2.5 and 5%. The aforementioned mixture contains from 25 to 75% of dye C.I.168, preferably from 25 to 50%.

The ink further contains:
- a vehicle composed of an aqueous solution containing from 2 to 10% of organic cosolvent, preferably from 5 to 7%. The preferred organic cosolvents are N-methylpyrrolidone, 2-pyrrolidone, N-(2-hydroxyethyl)-2-pyrrolidone, the monoethylene, diethylene and triethylene glycols, thiodiethylene glycol or mixtures thereof;
- a pH regulator, to maintain the pH within the desired range (between 7.5 and 8.5). Buffers which are useful for this purpose are sodium, potassium and ammonium phosphates, acetates, borates and carbonates;
- a surface tension regulator, to maintain the surface tension within the desired range (between 42 and 50 dynes/cm). The preferred ones comprise the alkynaryl diols and the aryl glycols;
- a commercially available biocide, such as Proxel (ICI) or Preventol D6 (Bayer), in a concentration of 0.05 to 0.2%.

It is, furthermore, possible to use, in the formulation, additives to promote fixing onto the paper, such as the aliphatic alcohols with a small number of carbon atoms, heteroglycols such as diethylene glycol monomethyl ether, diethylene glycol monoethyl ether or diethylene glycol monobutyl ether.

The inks formulated using the present invention may be used in ink jet printers and, in particular, in thermal ink jet printers.

### EXAMPLES

Inks were prepared of constant formulation, except for the differing concentration ratios of the two dyes contained.

The cosolvent and additives were selected from among those listed hereinabove.

In parallel with this, reference inks were formulated, which instead of the mixture of the two dyes, contain C.I.51 alone, in which the sodium ions were totally or partially substituted.

The proportioning of the components is expressed in % by weight.

### Example 1

| | |
|---|---|
| Dye C.I.51 substituted with 1,1'-iminodi-2-propanol | 0.75% |
| Dye C.I.168 | 2.25% |
| Diethylene glycol | 5.00% |
| N-methylpyrrolidone | 2.00% |
| Surfynol 104 (Air Products and Chemicals, Inc.) | 0.05% |
| Sodium bicarbonate | 0.03% |
| Proxel (ICI) | 0.10% |
| Demineralised water to | 100% |

### Example 2

The components are the same as in Ex. 1, except for the percentages of the two dyes:

| | |
|---|---|
| Dye C.I.51 substituted with 1,1'-iminodi-2-propanol | 1.50% |
| Dye C.I.168 | 1.50% |

### Example 3

The components are the same as in Example 1, except for the percentages of the dyes:

| | |
|---|---|
| Dye C.I.51 substituted with 1,1'-iminodi-2-propanol | 2.25% |
| Dye C.I. 168 | 0.75% |

### Example 4

The components are the same as in Example 3, except for the following:

| | |
|---|---|
| Dye C.I.51 substituted with 2,2'2"-nitrilotriethanol | 2.25% |

In order to carry out comparison tests, reference inks were prepared, containing only the dye C.I.51 in modified form and the formulation of which is derived from Example 1;

Reference ink 1:

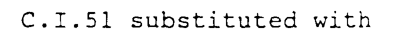

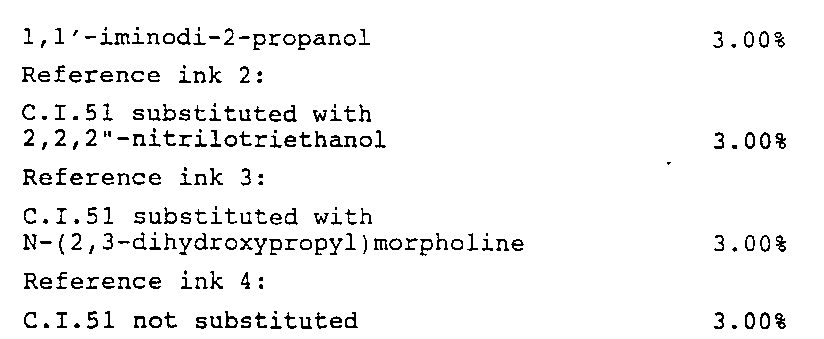

### TEST PROCEDURES AND RESULTS

The inks of the present invention were tested on Olivetti J.P 350 bubble ink jet printers.

The print samples employed for the assessments were made on xerographic paper, in accordance with two procedures:
- black areas of dimensions 4 × 3.5 cm, printed in "letter quality", for testing for black intensity, resistance to water and to light. The assessment of these parameters is carried out by means of reflectance spectrophotometric measurement of the trichomatic coordinate L*in the CIELab space.

Alphanumeric and graphical text, printed in "letter quality", for the assessment of the print quality. The examination is carried out by observing, using an optical microscope, the roundness of the dots and the presence of defects due to preferential migrations of the ink in the fibres of the paper. On the same text there is further carried out the "drop test", visually assessing the quantity of ink removed by the percolation of a drop of water on the sheet inclined at 45 degrees.

### "LIGHTFASTNESS" TEST CONDITIONS

The test on resistance to light is carried out by exposure in a fadeometer (Sun Test of the company Original Hanan), with an intensity of illumination of approximately 90 kLux. During the test, use is made of a window glass filter which limits the radiation to 300 mm in the UV range. The temperature of the specimen is approximately 40°C. The exposure is continued for 10 hours, corresponding to approximately 180 days of exposure in a well lit environment.

The sample treated in this way is subsequently subjected to the measurement of the trichomatic coordinate L*.

The difference between the initial value of L* and the value of L* after the Sun Test, indicated by DL, indicates the variations in the degree of black of the sample.

Low values of DL indicate small variations in the degree of black of the sample.

A DL of 1.5 is difficult to assess by visual means.

### "WATERFASTNESS" TEST CONDITIONS

The above described print samples are immersed in water for 5 minutes, without any type of agitation.

On the dried samples a measurement is made of the difference DL' between the initial value of L* and the value of L* after the water immersion test.

A good "waterfastness" corresponds to low values of DL'. Inks which give DL' values exceeding 4 are considered to be of no interest in terms of "waterfastness".

### "CLOGGING" TEST CONDITIONS

The writing head is kept protected by a rubber hood for 30 days, at a temperature of 40°C and at a relative humidity of 20%, reproducing the machine conditions when at rest.

An assessment is then made of any loss of dots printed under the conditions set out hereinbelow in Table 1: in particular, using a multinozzle printing head, an assessment is made of when the latter prints with all the nozzles after a certain number of repetitions of the printing of a text.

**TABLE 1**

| Sample tested | L | DL | DLW | print quality | clogging | drop test |
|---|---|---|---|---|---|---|
| Example 1 | 24.3 | 1.5 | 3.9 | *** | +++ | - |
| Example 2 | 26.0 | 1.5 | 3.4 | *** | +++ | + |
| Example 3 | 27.5 | 1.5 | 2.0 | *** | ++ | ++ |
| Example 4 | 28.5 | 1.5 | 0.3 | * | ++ | ++ |
| Reference ink 1 | 27.9 | 1.5 | 0.7 | ** | - | +++ |
| Reference ink 2 | 31.6 | 1.5 | 0.5 | N.A. | + | +++ |
| Reference ink 3 | 31.3 | 1.5 | 0.2 | ** | -- | +++ |
| Reference ink 4 | 29.1 | 1.5 | 1.2 | ** | -- | ++ |
| Print quality: *** excellent ** good * poor N.A. not acceptable | | | | | | |
| Clogging: +++ the head does not lose dots ++ the head continues in the first 5 texts after a prime + the head continues in the first 5 texts after two primes - the head continues in the first 5 texts after three primes -- even after numerous primes, the head does not continue in all the nozzles --- the head does not continue | | | | | | |
| Drop test: +++ excellent ++ good + poor - unsatisfactory | | | | | | |

As emerges from the table set out hereinabove, good results were obtained for various inks both in terms of "lightfastness" and in terms of "waterfastness". In particular, for Examples 1, 2 and 3, the quality of script and the clogging behaviour also proved to be satisfactory.

It is understood that modifications or improvements may be made to the inks described without, thereby, departing from the scope of the present invention.

## Claims

1. Ink for an ink jet printer comprising a dye component and a cosolvent vehicle for the dye component, characterised in that the dye component comprises a mixture of dye C.I.168 and dye C.I.51, the molecule of which contains at least one sodium ion.

2. Ink according to claim 1 further characterised in that the dye C.I.51 is modified by means of the substitution of substituted amines for at least some of the said sodium ions.

3. Ink according to claim 2 further characterised in that the substituted amines are: 2-aminoethanol; 2,2'-iminodiethanol; 2,2',2''-triethanolnitrile; 1-amino-2-propanol; 1,1'-iminodi-2-propanol; 1,1',1''-nitrilotri-2-propanol; N-methylethanolamine; N-N-dimethylethanolamine; N-methyldiethanolamine; 4-(2-hydroxyethyl)morpholine; or N-(2,3-dihydroxypropyl)morpholine.

4. Ink according to any preceding claim further characterised in that the mixture of dyes constitutes between 2.5% and 5% of the ink.

5. Ink according to any preceding claim further characterised in that the mixture of dyes comprises from 25% to 75% of dye C.I.168.

6. Ink according to any preceding claim further characterised in that the mixture of dyes comprises between 25% and 50% of dye C.I.168.

7. Ink according to any preceding claim further characterised in that the cosolvent vehicle is an aqueous solution of organic cosolvent selected from: N-methylpyrrolidone; 2-pyrrolidone; N-(2-hydroxyethyl)-2-pyrrolidone; monoethylene, diethylene and triethylene glycols; thiodiethylene glycol; and mixtures thereof.

8. Ink according to claim 7 further characterised in that the organic cosolvent is present in quantities of from 2 to 10%.

9. Ink according to any preceding claim further characterised in that the cosolvent is present in quantities of from 5 to 7%.

10. Ink according to any preceding claim comprising a ph regulator, further characterised in that the pH regulator is selected from sodium, potassium and ammonium phosphates, acetates, borates and carbonates.

11. Ink according to any preceding claim further characterised in that it has a pH of between 7.5 and 8.5.

12. Ink according to any preceding claim further comprising a surface tension regulator, further characterised in that the surface tension regulator is selected from akynaryl diols and aryl glycols.

13. Ink according to any preceding claim further characterised in that it has a surface tension of between 42 and 50 dynes/cm.

14. Ink according to any preceding claim further characterised in that it further comprises additives selected from: aliphatic alcohols with a small number of carbon atoms, heteroglycols of the type diethylene glycol monomethyl ether, diethylene glycol monoethyl ether, and diethylene glycol monobutyl ether.

## Patentansprüche

1. Tinte für das Tintenstrahldruckverfahren, enthaltend eine Farbstoffkomponente und einen ein Kolösungsmittel enthaltenden Träger für die Farbstoffkomponente, dadurch gekennzeichnet, daß die Farbstoffkomponente ein Gemisch aus Farbstoff C.I.168 und Farbstoff C.I.51 enthält, dessen Molekül mindestens ein Natriumion enthält.

2. Tinte gemäß Anspruch 1, dadurch gekennzeichnet, daß der Farbstoff C.I.51 durch Substituierung mindestens eines Teils der Natriumionen durch substituierte Amine modifiziert ist.

3. Tinte gemäß Anspruch 2, dadurch gekennzeichnet, daß die substituierten Amine sind: 2-Aminoethanol; 2,2'-Iminodiethanol; 2,2',2"-Triethanolnitril; 1-Amino-2-propanol; 1,1'-Iminodi-2-propanol; 1,1',1"-Nitrilotri-2-propanol; N-Methylethanolamin; N-N-Dimethylethanolamin; N-Methyldiethanolamin; 4-(2-Hydroxyethyl)morpholin oder N-(2,3-Dihydroxypropyl)morpholin.

4. Tinte gemäß einem der vorhergehenden Ansprüche, dadurch gekennzeichnet, daß das Farbstoffgemisch zwischen 2,5% und 5% der Tinte ausmacht.

5. Tinte gemäß einem der vorhergehenden Ansprüche, dadurch gekennzeichnet, daß das Farbstoffgemisch 25% bis 75% an dem Farbstoff C.I.168 enthält.

6. Tinte gemäß einem der vorhergehenden Ansprüche, dadurch gekennzeichnet, daß das Farbstoffgemisch 25% bis 50% an dem Farbstoff C.I.168 enthält.

7. Tinte gemäß einem der vorhergehenden Ansprüche, dadurch gekennzeichnet, daß der ein Kolösungsmittel enthaltende Träger eine wässrige Lösung eines organischen Kolösungsmittels aus der Gruppe: N-Methylpyrrolidon; 2-Pyrrolidon; N-(2-Hydroxyethyl)-2-pyrrolidon; Monoethylen-, Diethylen- und Triethylen-glycole; Thiodiethylen-glycol sowie Gemische daraus ist.

8. Tinte gemäß Anspruch 7, dadurch gekennzeichnet, daß das organische Kolösungsmittel in einer Menge von 2% bis 10% anwesend ist.

9. Tinte gemäß einem der vorhergehenden Ansprüche, dadurch gekennzeichnet, daß das Kolösungsmittel in einer Menge von 5% bis 7% anwesend ist.

10. Tinte gemäß einem der vorhergehenden Ansprüche mit einem Gehalt an einem pH-Wert-Regulierungsmittel, dadurch gekennzeichnet, daß das pH-Wert-Regulierungsmittel aus der Gruppe Natrium-, Kalium- und Amonium-Phosphate-acetate, -borate und -carbonate ausgewählt ist.

11. Tinte gemäß einem der vorhergehenden Ansprüche, dadurch gekennzeichnet, daß sie eine pH-Wert von zwischen 7,5 und 8,5 aufweist.

12. Tinte gemäß einem der vorhergehenden Ansprüche, die außerdem Regulierungsmittel für die Oberflächenspannung enthält, dadurch gekennzeichnet, daß das Regulierungsmittel für die Oberflächenspannung aus Alkinaryldiolen und Arylglycolen ausgewählt ist.

13. Tinte gemäß einem der vorhergehenden Ansprüche, dadurch gekennzeichnet, daß sie eine Oberflächenspannung von zwischen 42 und 50 Dyn/cm aufweist.

14. Tinte gemäß einem der vorhergehenden Ansprüche, dadurch gekennzeichnet, daß sie außerdem Zusatzstoffe aus der folgenden Gruppe aufweist: Aliphatische Alkohole mit einer geringen Anzahl von Kohlenstoffatomen sowie Heteroglycole des Typs Diethylenglycol-monomethylether, Diethylenglycol-monoethylether und Diethylenglycol-monobutylether.

## Revendications

1. Encre pour imprimante à jet d'encre comprenant un composant colorant et un véhicule de type cosolvant pour le composant colorant, caractérisée en ce que le composant colorant comprend un mélange de colorant C.I.168 et de colorant C.I.51, dont la molécule contient au moins un ion sodium.

2. Encre selon la revendication 1, encore caractérisée en ce que le colorant C.I.51 est modifié grâce au remplacement d'au moins certains desdits ions sodium par des amines substituées.

3. Encre selon la revendication 2, encore caractérisée en ce que les amines substituées sont : le 2-aminoéthanol, le 2,2'-iminodiéthanol; le 2,2',2"-triéthanolnitrile, le 1-amino-2-propanol ; le 1,1'-iminodi-2-propanol; le 1,1',1"-nitrilotri-2-propanol; la N-méthyléthanolamine ; la N,N-diméthyléthanolamine ; la N-méthyldiéthanolamine ; la 4-(2-hydroxyéthyl)morpholine; ou la N-(2,3-dihydroxypropyl)morpholine.

4. Encre selon l'une quelconque des revendications précédentes, encore caractérisée en ce que le mélange des colorants constitue entre 2,5 % et 5 % de l'encre.

5. Encre selon l'une quelconque des revendications précédentes, encore caractérisée en ce que le mélange des colorants comprend de 25 % à 75 % du colorant C.I.168.

6. Encre selon l'une quelconque des revendications précédentes, encore caractérisée en ce que le mélange de colorants comprend entre 25 % et 50 % du colorant C.I.168.

7. Encre selon l'une quelconque des revendications précédentes, encore caractérisée en ce que le véhicule de type cosolvant est une solution aqueuse d'un cosolvant organique choisi parmi : la N-méthylpyrrolidone ; la 2-pyrrolidone ; la N-(2-hydroxyéthyl)-2-pyrrolidone ; les monoéthylène , diéthylène et triéthylèneglycols ; le thiodiéthylèneglycol ; et leurs mélanges.

8. Encre selon la revendication 7, encore caractérisée en ce que le cosolvant organique est présent en des quantités de 2 à 10 %.

9. Encre selon l'une quelconque des revendications précédentes, encore caractérisée en ce que le cosolvant est présent en des quantités de 5 à 7 %.

10. Encre selon l'une quelconque des revendications précédentes, comprenant un régulateur de pH, encore caractérisée en ce que le régulateur de pH est choisi parmi les phosphates, acétates, borates et carbonates de sodium, potassium et ammonium.

11. Encre selon l'une quelconque des revendications précédentes, encore caractérisée en ce qu'elle possède un pH compris entre 7,5 et 8,5.

12. Encre selon l'une quelconque des revendications précédentes, comprenant en outre un régulateur de tension superficielle, encore caractérisée en ce que le régulateur de tension superficielle est choisi parmi les alkylaryldiols et les arylglycols.

13. Encre selon l'une quelconque des revendications précédentes, encore caractérisée en ce qu'elle possède une tension superficielle entre 42 et 50 dynes/cm.

14. Encre selon l'une quelconque des revendications précédentes, encore caractérisée en ce qu'elle comprend en outre des additifs choisis parmi : les alcools aliphatiques avec un petit nombre d'atomes de carbone, les hétéroglycols du type éther monométhylique de diéthylèneglycol, éther monoéthylique de diéthylèneglycol et éther monobutylique de diéthylèneglycol.
